# EUROPEAN PATENT APPLICATION

(11) **EP 2 466 948 A1**
(43) Date of publication of application: **20.06.2012**
(21) Application number: 09848152.6
(22) Date of filing: 11.08.2009
(51) Int. Cl.: H04W 28/02, H04L 12/18

(54) **METHOD FOR TRIMMING TRAFFIC IN E-MBMS SYSTEM AND BM-SC FOR IMPLEMENTING METHOD**

(71) Applicant: Alcatel Lucent, 75007 Paris (FR)
(72) Inventor: CHEN, Yu, Shanghai 201206 (CN); WANG, He, Shanghai 201206 (CN)
(74) Representative: 2SPL Patentanwälte
(86) International application number: PCT/CN2009/000919
(87) International publication number: WO 2011/017822

(57) **Abstract**

The present invention provides a method of trimming traffic in an e-MBMS system and BM-SC for implementing the method. The method comprises: determining, by a BM-SC, an ABBR of the multiplexing; allocating, by an MCE, resources based on the determined ABBR; determining, by the BM-SC, whether data amount to be transmitted in a synchronization period exceeds resources allocated in the synchronization period; and dropping, by the BM-SC, tail data packets that cannot be sent in the synchronization period in the multiplexed service if it is determined to exceed. Further, the method also comprises: before the step of determining, voluntarily dropping, by the BM-SC, some data packets in the multiplexed service.

## Description

### FIELD OF THE INVENTION

The present invention relates to the field of mobile communication, and more specifically, relates to packet scheduling and traffic trimming in an evolved multimedia broadcast multicast service (e-MBMS) system where statistical multiplexing is performed by utilizing an aggregated bit rate (ABBR).

### DESCRIPTION OF THE RELATED ART

Nowadays, mass multimedia services emerge with the rapid development of mobile technology. For some application services, for example, video-on-demand, TV broadcast, video conference, mobile TV, etc., multiple users may simultaneously receive the same data. In order to effectively utilize mobile network resources, the WCDMA/GSM global standardization organization 3GPP provides a multimedia broadcast multicast service (MBMS)/ evolved multimedia broadcast multicast service (e-MBMS). The MBMS/e-MBMS refers to a point-to-multi-point service where a data source sends data to multiple users, so as to realize network resource sharing. The MBMS/e-MBMS defined by 3GPP may not only implement the multicast and broadcast of message of pure-text low-rate type but also may implement the multicast and broadcast of high-rate multimedia service, which undoubtedly goes with the development trend of mobile data in the future.

For e-MBMS, in order to facilitate the operation of multicast broadcast single-frequency network (MBSFN), all behaviors of base stations (eNBs) should be synchronized. An eNB should send out all data packets within a specific synchronization period. If the data amount in the buffer is greater than the allocated resource s, then it would be inevitable to perform packet dropping. The problem lies in where and how to perform packet dropping during the scheduling period without affecting the operation of synchronized MBSFN and how to enable the system to be more robust in exceptional cases.

Currently, IPwireless proposes some distributed algorithms in R2-093737. Specifically, it proposes three solutions that are all based on distributed architecture. These solutions adopt traditional scheduling algorithms, for example, proportional fairness scheduling algorithm. The consequence is that every eNB has to be standardized with the same scheduling algorithm to ensure synchronized operation. In the prior arts, no literature has disclosed standardizing the radio resource management (RRM) algorithm.

### SUMMARY OF THE INVENTION

In view of the above circumstances, the present invention provides a centralized packet scheduling and traffic trimming scheme, such that it would be unnecessary to standardize a scheduling algorithm at each eNB.

According to one aspect of the present invention, there is provided a method of trimming traffic in an evolved multimedia broadcast multicast service (e-MBMS) system, the e-MBMS system employs aggregated bit rate (ABBR) multiplexing to services, the method comprising: determining, by a broadcast multicast service center BM-SC in the e-MBMS system, an ABBR of the multiplexing; allocating, by a multimedia broadcast multicast service coordination entity MCE in the e-MBMS system, resources based on the determined ABBR; determining, by the BM-SC, whether the data amount to be transmitted in a synchronization period exceeds the resources allocated in the synchronization period; dropping, by the BM-SC, tail data packets that cannot be sent in the synchronization period in the multiplexed service in case that it is determined to exceed.

Preferably, the method further comprises: before the step of determining, voluntarily dropping, by the BM-SC, some data packets in the multiplexed service.

Preferably, the some data packets occupy at most 1% plus a margin of all data packets in the multiplexed service. Further, the margin occupies 0.1% of all data packets in the multiplexed service.

Preferably, a base station eNB in the e-MBMS system further drops data packets based on a predefined rule. Further, the pre-defined rule comprises: dropping data packets of services in the multiplexed services according to an order reverse to a transmission sequence of services in the multiplexed services.

According to another aspect of the present invention, there is provided a BM-SC in an e-MBMS system, the e-MBMS system employs aggregated bit rate (ABBR) multiplexing to services, the BM-SC comprising: processing means configured to determine an ABBR of the multiplexing; determining means configured to determine whether data amount to be transmitted in a synchronization period exceeds resources allocated based on the determined ABBR in the synchronization period; and output data stream shaping means configured to drop tail data packets that cannot be transmitted in the synchronization period in a multiplexed service in the case that it is determined to exceed.

Preferably, the BM-SC is configured such that the output data stream shaping means first voluntarily drops some data packets in the multiplexed service, and then the determining means performs determining.

Preferably, the some data packets occupy at most 1% plus a margin of all data packets in the multiplexed service. Further, the margin occupies 0.1% of all data packets in the multiplexed service.

According to a further aspect of the present invention, there is provided an e-MBMS system, comprising the BM-SC.

Preferably, the e-MBMS system further comprises a base station eNB that further drops data packets based on a predefined rule. Further, the pre-defined rule comprises: dropping data packets of services in the multiplexed services according to an order reverse to a transmission sequence of services in the multiplexed services.

According to the present invention, because packet dropping is determined at the BM-SC, standardization with respect to a complex distributed scheduling algorithm may be avoided, such that the implementation of the present invention is much simpler, without the need of dramatically modifying the existing system architecture.

### BRIEF DESCRIPTION OF THE DRAWINGS

Hereinafter, preferred embodiments of the present invention will be specifically described with reference to the drawings, wherein,

Fig. 1 is a schematic diagram of an e-MBMS system.

Fig. 2 is a statistical characteristic of a CBR service.

Fig. 3 is a flow chart of a method of trimming traffic that combines voluntary packet dropping and passive packet dropping according to an embodiment of the present invention.

Fig. 4 is a structural block diagram of BM-SC according to an embodiment of the present invention.

### DETAILED DESCRIPTION OF THE INVENTION

### Introduction of ABBR Multiplexing

In a multi-stream transmission system, statistical multiplexing technology is widely applied. Through multiplexing parallel streams, considerable multiplexing gain may be achieved. Gain is achieved through the statistical behaviors on the traffic. In other words, when a stream needs more bandwidth, other streams are statistically subjected to a low bit-rate state. Statistical multiplexing is applicable for a broadcast system, because gain is achieved utilizing statistical characteristics, instead of physical layer feedback and the like. Multiplexing gain is quite considerable. For example, in DVB-H, it is found that 30% ∼ 40% gain may be achieved.

In an evolved multimedia broadcast multicast service (e-MBMS) system, statistic multiplexing may be performed based on aggregated bit rate (ABBR). Specifically, multiple e-MBMS services share a same ABBR. Each e-MBMS service may potentially utilize the whole ABBR. The e-MBMS services sharing an ABBR form an ABBR bundle.

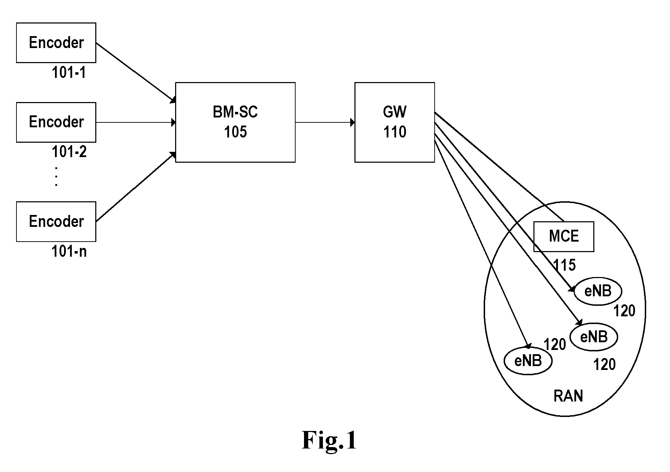

Fig. 1 is a schematic diagram of an e-MBMS system.

The e-MBMS system 100 as illustrated in Fig. 1 comprises one or more encoders 101-1, 101-2, ..., 101-n, a broadcast multicast service center (BM-SC) 105, a gateway (GW) 110, an MBMS coordinating entity (MCE) 115, and one or more base stations (eNBs) 120. In this embodiment, MCE 115 and eNBs 120 may be located in the radio access network (RAN).

The encoders 101-1, 101-2, ..., 101-n receive content from corresponding content provider server, encode it and provide the encoded content to the BM-SC 105.

The BM-SC 105 receives and transmits the encoded e-MBMS content. The BM-SC 105 configures the statistic multiplexing, because the BM-SC 105 may know the information regarding service combination. For example, in a scenario of mobile TV, the BM-SC 105 may know the information regarding a desired combination of TV channels. For example, the BM-SC 105 may know the service area, and may know and possibly control the statistic characteristics of the user service stream, for example, whether the encoding is constant bit rate (CBR) or variable bit rate (VBR), or whether the encoder is MPEG4 or H.264.

For example, the BM-SC 105 may be configured to obtain statistic parameters of services, such that it may obtain the information regarding service combination and may multiplex the services based on the information. Specifically, the BM-SC 105 may set an ABBR for service multiplexing based on the obtained service parameters.

Besides, the BM-SC 105 may be configured to perform rate control coordination among application encoders with respect to the stream services, such that the encoder may generate a VBR service stream, while the aggregated bit rate may maintain constant.

The GW 110 establishes an EPS bearer for the services and transmits relevant information regarding the ABBR bundle to the MCE 115. The MCE 115 allocates resources based on the ABBR information transmitted from the gateway 110 so as to implement multiplexing among different services in the same ABBR bundle, i.e., different services share resources. Based on the allocated resources, the eNB 120 finally provides a service that is of interest to the user to its user equipment (UE) (not shown).

Services belonging to the same ABBR bundle share the resources allocated to the bundle. Different services are scheduled, i.e., multiplexed, according to the resource allocation scheme based on ABBR bundle.

### Packet Dropping

Through the above multiplexing mechanism, considerable multiplexing gain may be achieved. However, the bit rates of multiplexed services are still variable. Meanwhile, multiplexing is performed within a multicast channel (MCH), and for the MCH, resources are usually fixedly allocated. Thus, the bit rate after multiplexing may possibly exceed the allocated bandwidth. Therefore, it is needed to drop some data packets in a particular synchronization period. Thus, passive packet dropping function is desirable.

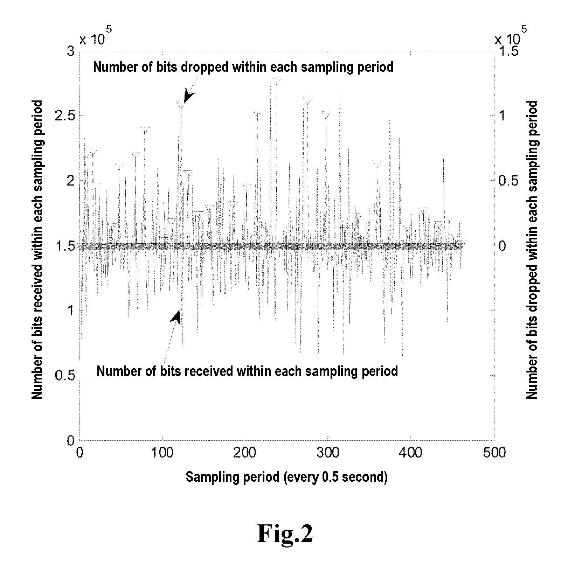

In order to drop data packets without compromising eNB synchronization, the following two solutions may exist: adding a safe margin to a bandwidth allocated to the MCH; or synchronously drop data packets in case of overflow/exceeding. It is found through simulation that if 1% of data packets are allowed to drop, then the required resources would be much less, while the gain may still maintain as high as 50%. Therefore, the key lies allowing dropping a small amount of data. It is always so for VBR service and CBR service. Fig. 2 illustrates statistical characteristics of a CBR service, wherein the dropping rate is 1%, and 1.5 × 10⁵bps resources are allocated within each 0.5s period.

As illustrated in Fig. 2, the bit rate of CBR service based on real-time statistics is also variable, although this variation is more smooth than the VBR service. Thus, voluntary packet dropping function is also desirable.

Because it is not an ideal selection to drop more data, here, it is supposed here that at most 1% of data packets may be dropped during the transmission. From the above depiction, it is seen that dropping function is desirable. The problem lies in where to implement the function. Because traffic is transmitted from the BM-SC and the BM-SC has the MBMS functionality such as SYNC entity, the BM-SC is an appropriate location for shaping the traffic. From Fig. 2, it is seen that at most 1% of data packets is needed to drop.

According to one embodiment of the present invention, passive packet dropping is performed in the BM-SC. Specifically, the BM-SC determines the ABBR of the service multiplexing and monitors the traffic; the MCE allocates resources based on the needed ABBR; and when the traffic exceeds the allocated resources, the BM-SC will drop some data packets.

According to another embodiment of the present invention, voluntary packet dropping is also performed in the BM-SC. Specifically, the BM-SC voluntarily drops some data packets in a multiplexed service. Such dropping, for example, takes into account the allocated resources as well as the delay requirement of data transmission (for example, the data packets with 1 second delay will be dropped). It is found through simulation that the dropping percentage may be 1%. Additionally, a margin may be set at the basis of 1%, namely, dropping 1%+ε of data packets. For example, the margin ε may be 0.1%.

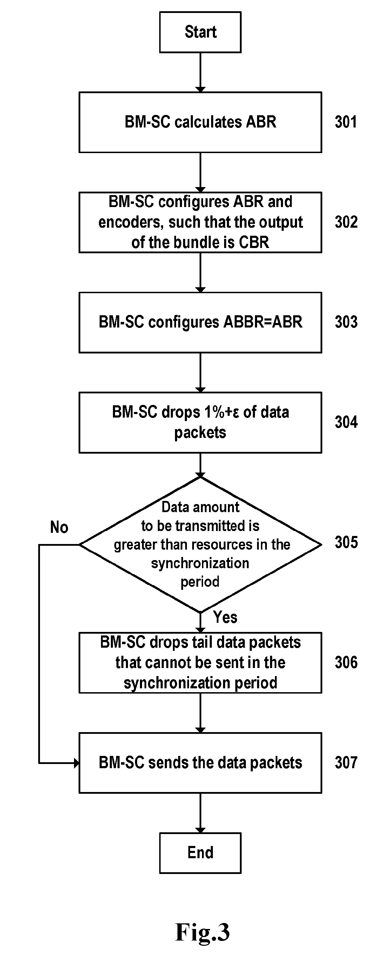

Further, Fig. 3 is a flow chart of the method of trimming traffic that combines voluntary packet dropping and passive packet dropping according to an embodiment of the present invention.

As illustrated in Fig. 3, first, at step 301, the BM-SC calculates an average bit rate (ABR) for the multiplexed services. Then, at step 302, the BM-SC configures ABR and encoders, such that the output of the multiplexing bundle is CBR. At step 303, the BM-SC configures the ABBR=ABR. Through these three steps, the BM-SC completes configuration of the ABBR multiplexing.

Then, at step 304, the BM-SC shapes (voluntary dropping) the output data stream through discarding 1%+a certain margin ε of data packets. In this embodiment, ε, for example, may be 0.1%. Then, at step 305, it is monitored whether the data amount to be transmitted is greater than the resources allocated in the synchronization period. In the case of "yes", then at step 306, tail data packets that cannot be sent in the synchronization period are dropped (passive dropping), and then the method proceeds to step 307, where the data packets are sent; otherwise, the method directly proceeds to step 307.

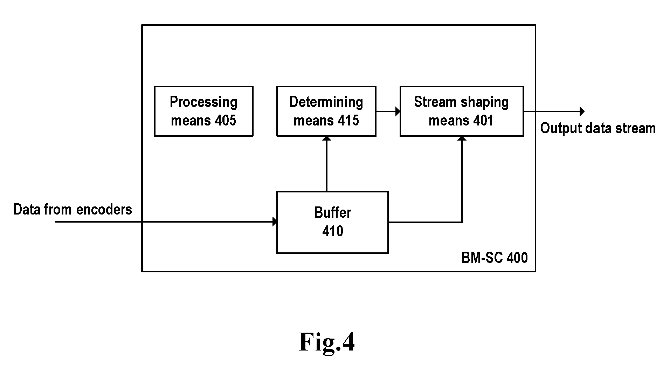

Thus, a BM-SC design may be further obtained, which may be used for implementing the above method. Fig. 4 is a structural block diagram of BM-SC according to an embodiment of the present invention.

As illustrated in Fig. 4, the BM-SC 400 comprises: processing means 405 that may be used to calculate an ABR and to configure an ABBR based thereon (which may refer to steps 301 ∼303) and further to control various components in the BM-SC (the connection relationship between the processing means and various components is omitted in Fig.4); a buffer 410 for receiving and temporarily storing data received from encoders; determining means 415 for determining, based on the data stored in the buffer 410, whether data amount to be transmitted in a synchronization period exceeds resources allocated by the MCE according to the determined ABBR in the synchronization period; and output data stream shaping means 401 configured to drop tail data packets that cannot be transmitted in the synchronization period in a multiplexed service when it is determined to exceed.

Further, the BM-SC 400 is further configured such that the output data stream shaping means 401 first voluntarily drop some data packets in the multiplexed service, and then the determining means 415 performs determining.

In this way, it may avoid standardizing a complex distributed scheduling algorithm that considers equality, throughput, and priority and the like. Thus, such packet dropping is transparent to RAN.

### Further Improvement of Robustness

In the embodiments of the present invention, the traffic is shaped in an upstream node BM-SC of eNB, thus the eNB does not need a complex distributed dropping function. However, under this scheme, some abnormal circumstances may occur. For example, when a BM-SC sends data to the gateway GW, some data packets are delayed to the next synchronization period, and thus the next synchronization period needs to transmit excessive data packets. Further, for example, when the BM-SC and MCE are manufactured by different providers and thus have different algorithms, for example, the packet dropping algorithm in BM-SC is not ideal, or the MCE desires to save resources as most as possible, some few data packets cannot be sent sometimes. Although these cases occur extremely rarely, such abnormal circumstances should be handled in consideration of system robustness.

For these abnormal circumstances, the simplest manner is that the eNB drops data packets of a particular service based on predefined rules. For example, this rule may be always dropping the last service in the transmission sequence, which service has enough data to be dropped. Because it occurs rather rarely, it will not affect the QoS of the last service. More generally speaking, in abnormal circumstances, data packets of services s are dropped in an order reverse to the transmission sequence. In this way, only all data packets of sacrificed service (i.e, the service with data packets dropped) are dropped, may the other services be affected.

The embodiments as described above are only for illustrative purposes, not intended for limiting the scope of the present invention. Those skilled in the art should understand that various modifications and variations on form and detail may be conducted to these embodiments without departing from the scope and spirit of the present invention. The scope of the present invention is defined by the appended claims and the equivalents.

## Claims

1. A method of trimming traffic in an evolved multimedia broadcast multicast service e-MBMS system, the e-MBMS system employing an aggregated bit rate ABBR multiplexing to services, the method comprising:
determining, by a broadcast multicast service center BM-SC in the e-MBMS system, an ABBR of the multiplexing;
allocating, by a multimedia broadcast multicast service coordination entity MCE in the e-MBMS system, resources based on the determined ABBR;
determining, by the BM-SC, whether data amount to be transmitted in a synchronization period exceeds resources allocated in the synchronization period; and
dropping, by the BM-SC, tail data packets that cannot be sent in the synchronization period in a multiplexed service if it is determined to exceed.

2. The method according to claim 1, further comprising:
voluntarily dropping, by the BM-SC, some data packets in the multiplexed service before the step of determining.

3. The method according to claim 2, wherein said some data packets occupy at most 1% plus a margin of all data packets of the multiplexed service.

4. The method according to claim 3, wherein the margin occupies 0.1% of all data packets of the multiplexed service.

5. The method according to claim 1, wherein a base station eNB in the e-MBMS system further drops data packets based on a predefined rule.

6. The method according to claim 5, wherein the pre-defined rule comprises: dropping data packets of services in the multiplexed services according to an order reverse to a transmission sequence of services in the multiplexed services.

7. A broadcast multicast service center BM-SC in an evolved multimedia broadcast multicast service e-MBMS system, the e-MBMS system employing an aggregated bit rate ABBR multiplexing to services, the method comprising:
processing means configured to determine an ABBR of the multiplexing;
determining means configured to determine whether data amount to be transmitted in a synchronization period exceeds resources allocated based on the determined ABBR in the synchronization period; and
output data stream shaping means configured to drop tail data packets that cannot be sent in the synchronization period in a multiplexed service when it is determined to exceed.

8. The BM-SC according to claim 7,wherein the BM-SC is configured such that the output data stream shaping means first voluntarily drops some data packets in the multiplexed service, and then the determining means performs determining.

9. The BM-SC according to claim 8, wherein said some data packets occupy at most 1% plus a margin of all data packets of the multiplexed service.

10. The BM-SC according to claim 9, wherein the margin occupies 0.1% of all data packets of the multiplexed service.

11. An evolved multimedia broadcast multicast service e-MBMS system, comprising the BM-SC according to any one of claims 6-10.

12. The e-MBMS system according to claim 11, further comprising a base station eNB that further drops data packets based on a predefined rule.

13. The e-MBMS system according to claim 12, wherein the pre-defined rule comprises:
dropping data packets of services in the multiplexed services according to an order reverse to a transmission sequence of services in the multiplexed services.
